# EUROPEAN PATENT APPLICATION

(11) **EP 1 494 013 A1**
(43) Date of publication of application: **05.01.2005**
(21) Application number: 04253477.6
(22) Date of filing: 10.06.2004
(51) Int. Cl.: G01N 21/90, G01N 21/88

(54) **Apparatus for two colour container inspection**

(30) Priority: 30.06.2003 US 610421
(71) Applicant: Emhart Glass S.A., 6330 Cham (CH)
(72) Inventor: Diehr, Richard D., Horseheads, New York 14845 (US)
(74) Representative: Warren, Anthony Robert

(57) **Abstract**

A machine is provided for inspecting a portion of a container, for example the base of a bottle (10), which is conveyed to an inspection location. A source of two-color light (12) illuminates the bottle (10), and a beam splitter (19) divides the beam into first and second beams of two-color light. One camera (22) images the beam after one color has been filtered, and a second camera (23) images the beam after the second color has been filtered.

## Description

The present invention relates to machines which inspect containers such as bottles for defects, and more particularly to a system for inspecting the bottom of a bottle for defects.

Machines for inspecting glass bottles and the like are performing more and more inspections using camera technology. One of the areas of interest is the base or top of a bottle, and a system may look at the base or top as an opaque or transparent object to identify defects.

It is an object of the present invention to provide a machine for inspecting glass containers which can, at a single inspection station, conduct a pair of different inspections for defects in a container.

According to the present invention, there is provided a machine for inspecting a portion of a container as defined in claim 1.

The present invention will now be described with reference to the accompanying drawings which illustrate a presently preferred embodiment incorporating the principles of the invention, and in which:
Figure 1 is an oblique view of a system for inspecting the bottom of a bottle for defects which has two cameras;
Figure 2 is a view of a portion of the image of one of the cameras which indicates a defect; and
Figure 3 is a view of the same portion of the image of the other one of the cameras which indicates the same defect.

A single camera lens, dual camera imaging system is illustrated. A bottle 10 is being carried through an inspection machine by a belt type drive which may have upper and lower belts 11 engaging the front and rear walls of the bottle. The belt type drive removes a bottle from an infeed conveyor, conveys the bottle through an inspection location and then releases the bottle to an outfeed conveyor. An inspection system is located at the inspection location and includes a light source assembly 12 which includes a light source 14 which directs light axially upwardly through the bottle. While in this embodiment the bottom of the bottle is inspected, the top of the bottle (the sealing surface, for example) could also be inspected.

The camera assembly includes a lens 18 which directs the light to a beam splitter 19 and a pair of cameras 21,22 which image each of the beams. Light passes through the bottom of the bottle upwardly through the opening of the bottle to the beam splitter, and images the bottom of the bottle on the image plane of the first camera 21.

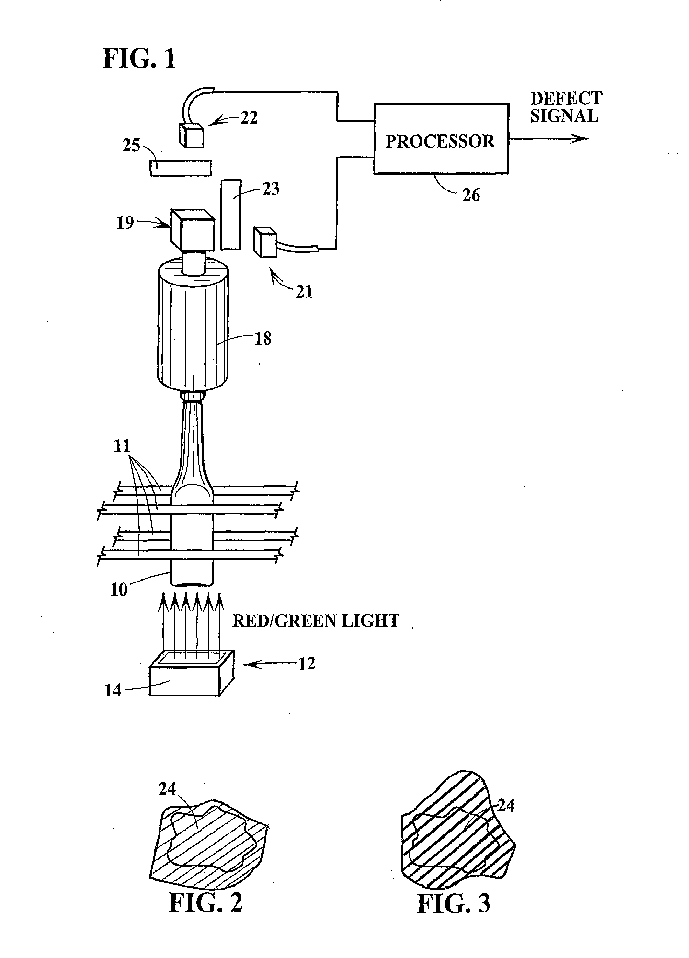

The light source has two different colors, for example red and green. The beam splitter splits the beam and sends the red and green light to both cameras. In front of one camera, i.e. the camera 21, would be a red filter 23 to filter out the red light, and in front of the other camera i.e. the camera 22, would be a green filter 25 to filter out the green light. The red light could appear as bright light, and Figure 2 illustrates how a defect, for example an inclusion 24, might appear to the camera seeing red light. The image resulting from the inclusion 24 is the shadow or field having an outline and/or light intensity and/or colour dependent upon the nature of the particular defect.

The green light could appear as darkness, and Figure 3 illustrates how the same defect, i.e. inclusion 24 with the same outline and in the same position, might appear to the camera seeing the green light, i.e. as a shadow or field having an outline and/or intensity and/or colour dependent upon the nature of the particular defect.

The image of each camera is evaluated periodically by a Processor 26 and a suitable defect signal will be issued when a defect is detected.

## Claims

1. A machine for inspecting a portion of a container which is conveyed to an inspection location, comprising
a source of two color light for illuminating a container,
a camera system for imaging the illuminated container including
a first camera,
a second camera, and
a beam splitter for directing the two colored light to said first camera and for directing the two colored light to said second camera,
a first filter intermediate said first camera and said beam splitter for removing one of the light colors, and
a second filter intermediate said second camera and said beam splitter for removing the second one of the light colors.

2. A machine for inspecting a container according to claim 1, wherein the portion of the container to be inspected is the bottom of the container.

3. A machine for inspecting a container according to claim 1 or 2, wherein the two light colors are green and red.
